# EUROPÄISCHE PATENTANMELDUNG

(11) **EP 2 292 568 A1**
(43) Veröffentlichungstag der Anmeldung: **09.03.2011**
(21) Anmeldenummer: 09167341.8
(22) Anmeldetag: 06.08.2009
(51) Int. Cl.: C04B 28/02, C04B 24/08

(54) **Zusatzmittel für zementöse Zusammensetzung**

(71) Anmelder: Schomburg GmbH & Co. KG, 32760 Detmold (DE)
(72) Erfinder: Herold, Michael, 32694 Dörentrup (DE); Adler, Dr. Jürgen, 32760 Detmold (DE)
(74) Vertreter: Fleuchaus, Andrea

(57) **Zusammenfassung**

Die vorliegende Erfindung betrifft ein Zusatzmittel zur Herstellung von zementösen Zusammensetzungen, wie z. B. Beton. Insbesondere betrifft die vorliegende Erfindung einen Dichtmittelzusatz für zementöse Zusammensetzungen, also ein Zusatzmittel, dass die wasserabweisenden und wasserabdichtenden Eigenschaften der zementösen Zusammensetzung bzw. des Betons verbessert.

## Beschreibung

Die vorliegende Erfindung betrifft ein Zusatzmittel zur Herstellung von zementösen Zusammensetzungen, wie z. B. Beton. Insbesondere betrifft die vorliegende Erfindung einen Dichtmittelzusatz für zementöse Zusammensetzungen, also ein Zusatzmittel, dass die wasserabweisenden und wasserabdichtenden Eigenschaften der zementösen Zusammensetzung bzw. des Betons verbessert.

Zementöse Zusammensetzungen und insbesondere Beton werden seit langem zur Errichtung von Bauwerken im Hoch- und Tiefbau verwendet. Dabei werden durch die Zugabe von Zusatzmitteln zum Frischbeton dessen Eigenschaften oder aber die Eigenschaften der ausgehärteten zementösen Zusammensetzung bzw. des Festbetons mitunter stark beeinflusst. Zusatzmittel sind Gegenstand umfangreicher Forschungs- und Entwicklungstätigkeit und stellen einen wachsenden Markt im Bereich der Bauindustrie dar.

Es gibt heute eine Vielzahl von Zusatzmitteln, die zur Herstellung von zementösen Zusammensetzungen und/oder Beton eingesetzt werden. Diese liegen üblicherweise entweder in fester oder in flüssiger Form vor. Die heute verfügbaren Zusatzmittel unterscheiden sich stark in ihren Eigenschaften und werden in unterschiedlichsten Anwendungsgebieten eingesetzt. Zum Beispiel gibt es in der Betontechnik Zusatzmittel zur Beeinflussung der Eigenschaften des Frischbetons, wie beispielsweise der Plastizität, der Verarbeitbarkeit oder der Abbindeeigenschaften sowie zur Beeinflussung der Eigenschaften des Festbetons, wie zum Beispiel der Druck- und/oder Biegezugfestigkeit, der Dichtigkeit oder der Oberflächeneigenschaften. Typische Wirkprinzipien der erhältlichen Zusatzmittel erstrecken sich vom Verflüssigen, Dispergieren und Verdicken über das Erzeugen von Luftporen und das Imprägnieren bis hin zum Abdichten und Verkleben von zementösen Zusammensetzungen bzw. Beton.

Nachfolgend wird die Erfindung anhand von Dichtmitteln für Beton erläutert. Andere Möglichkeiten der Verwendung der erfindungsgemäßen Lehre bestehen darüber hinaus jedoch auch.

Es ist ein wesentliches Bedürfnis, Gebäude, Behausungen, Brückenköpfe, Brückenpfeiler, Hafenmolen, Staumauern, Abwasserkanäle, Tunnels, im Wasser stehende Fundamente oder andere Bauwerke aus Beton so zu bauen, dass Feuchtigkeit weder eindringen kann noch eine erhebliche Durchfeuchtung des Festbetons erfolgt, auch wenn am Beton feuchtes Erdreich oder sogar Wasser unmittelbar ansteht. Für den Bau solcher Bauwerke werden im Allgemeinen Betone eingesetzt, die sich durch ein sehr dichtes Gefüge auszeichnen und einen niedrigen Wasser/Zementwert aufweisen.

In der Vergangenheit wurde zur Herstellung von wasserundurchlässigem Beton in der Regel die Betonrezeptur so angepasst, dass der Wasser/Zementwert verringert ist. Ein niedriger Wasser/Zementwert führt in gewissen Grenzen sowohl zu einer erhöhten Festigkeit als auch zu einer verbesserten Dichtigkeit des ausgehärteten Betons. Allerdings hat die Reduktion des Wasser-/Zementwertes auch nachteilige Auswirkungen auf die Verarbeitbarkeit des Frischbetons. Diese Einschränkungen bei der Verarbeitbarkeit des Frischbetons fuhren oft dazu, dass zusätzlich andere Abdichtungssysteme eingesetzt werden müssen, wie z. B. Bitumenanstriche, Sperrfolien oder dergleichen oder in Kauf genommen wird, dass der Beton bis zu einem gewissen Grad durchfeuchtet.

Es ist bekannt, dass auch unter optimalen Herstellungsbedingungen für den Beton und trotz fachmännisch ausgeführter Bewehrung während der Betonaushärtung und auch im Laufe der Standzeit des Bauwerks Risse im Beton auftreten können. Durch derartige Risse im Beton wird sowohl die Wasserdichtigkeit als auch das Durchfeuchtungsverhalten des Betons negativ beeinflußt. Darüber hinaus können durch solche Risse Wasser und Kohlendioxid verstärkt in den Beton eindringen. Die fortschreitende Karbonatisierung senkt den pH Wert des Betons bis hin zur Bewehrung, wodurch die Passivierung des Stahls verlorengeht. Dies führt zu erheblichen Korrosionsschäden derselben, was schließlich hohe Sanierungskosten oder gar einen Abriss des Bauwerks nach sich ziehen kann. Auch der Einsatz optimierter Betonrezepturen kann die Entstehung von Kapillarporen und zumindest mikroskopischen Rissen nicht zuverlässig verhindern.

Bei den heute bekannten Dichtmittelzusätzen unterscheidet man überwiegend zwischen hydrophobierenden und kristallisierenden Dichtmittelzusätzen.

Hydrophobierende Dichtmittel enthalten zum Beispiel Erdalkalimetallsalze von Fettsäuren, durch welche die kapillare Wasseraufnahme des Betons reduziert wird. Beispielsweise richten sich bei der Verwendung von Calciumsteraten oder Calziumoleaten die Moleküle aufgrund ihrer tensidischen Struktur an den Oberflächen des Betons, also auch an den Innenflächen von Rissen oder Kapillaren so aus, dass die langen unpolaren Kohlenwasserstoffketten von den Festkörperoberflächen weggerichtet sind und sich die polaren Caboxylatgruppen an den Festkörperoberflächen anlagern. Hierdurch wird die Benetzbarkeit der Betonoberflächen deutlich reduziert.

Im Falle kristallisierender Dichtmittelzusätze erfolgt ein Zumischen von löslichen Carbonaten und organischen Säuren, wie zum Beispiel Weinsäure oder Fumarsäure zum Frischbeton. Diese Verbindungen führen zur Ausbildung von Kristallstrukturen in den Kapillaren des Betons, wodurch diese verschlossen werden und hierdurch das Eindringen von Wasser vermindert wird.

Aufgabe der vorliegenden Erfindung ist es, einen verbesserten Dichtmittelzusatz zur Herstellung von zementösen Zusammensetzungen bzw. Beton bereitzustellen, welcher auch im Bereich von Wasserbauten eine gute Abdichtung des Bauwerks gewährleistet und die Gefahr eines Durchfeuchtens des Betons vermindert. Diese und weitere Aufgaben werden durch die Gegenstände der unabhängigen Ansprüche gelöst. Bevorzugte Ausführungsformen der Erfindung sind Gegenstand der abhängigen Ansprüche.

Danach enthält ein erfindungsgemäßer Dichtmittelzusatz für zementöse Zusammensetzungen wenigstens ein synthetisches und/oder natürliches Wachs in wässriger Dispersion oder Emulsion.

Der erfindungsgemäße Dichtmittelzusatz für zementöse Zusammensetzungen und insbesondere Beton ist nach seiner Art ein hydrophobierender Dichtmittelzusatz und weist verbesserte hydrophobierende Eigenschaften auf. Dadurch verbessern sich die wasserabweisenden Eigenschaften der Betonoberflächen, insbesondere im Innenbereich von Rissen und Kapillaren und es resultiert eine verbesserte Dichtwirkung bzw. Wirkung gegen ein Durchfeuchten des Betons.

Die Erfinder des vorliegenden Dichtmittelzusatzes für zementöse Zusammensetzungen haben in erfindungsgemäßer Weise erkannt, dass synthetische und/oder natürliche Wachse, deren hydrophobierenden Eigenschaften im Bereich der Dichtmittelzusätze bislang keine Beachtung fanden besonders gut für die Verwendung in solchen Dichtmittelzusätzen geeignet sind und hierbei gute hydrophobierende Eigenschaften mitbringen.

Das erfindungsgemäße Zusatzmittel ist vorzugsweise flüssig, was besonders vorteilhaft ist, da sich flüssige Zusatzmittel bei der Herstellung von zementösen Zusammensetzungen bzw. Beton leichter verarbeiten lassen und überdies genauer dosierbar sind.

Im Rahmen der Beschreibung der vorliegenden Erfindung werden unter dem Begriü"Wachs oder Wachse" Stoffe verstanden, die voranging durch ihre mechanisch-physikalischen Eigenschaften charakterisiert sind. Ihre chemischen Zusammensetzungen bzw. ihre Herkunft kann hingegen sehr unterschiedlich sein. Ein Stoff wird mitunter als Wachs bezeichnet, wenn er bei 20 °C knetbar, fest bis brüchig hart ist, eine grobe bis feinkristalline Struktur aufweist, farblich durchscheinend bis opak, aber nicht glasartig ist, über 40 °C ohne Zersetzung schmilzt, wenig oberhalb des Schmelzpunktes leicht flüssig (wenig viskos) ist, eine stark temperaturabhängige Konsistenz und Löslichkeit aufweist sowie unter leichtem Druck polierbar ist. Das Vorhandensein aller oder einiger der vorstehenden Eigenschaften ist allerdings nicht zwingend erforderlich, um einen Stoff als Wachs im Sinne der Erfindung zu bezeichnen.

Unter "Wachs" oder "Wachsen" werden im Rahmen der Beschreibung der vorliegenden Erfindung tierische und pflanzliche Wachse verstanden, zu denen zum Beispiel auch Lipide zählen. Die Hauptkomponenten solcher Wachse sind Ester von Fettsäuren mit langkettigen, aliphatischen, primären Alkoholen, den so genannten Wachsalkoholen.

Weiterhin werden unter "Wachsen" im Sinne der Erfindung beispielsweise auch Jojobaöl oder ähnliche Substanzen verstanden, die nicht aus Triglyceriden bestehen und damit keine fetten Öle sind, sondern chemisch betrachtet flüssige Wachse darstellen.

Darüber hinaus sind "Wachse" im Sinne der Erfindung auch synthetische Wachse, die hauptsächlich aus Erdöl gewonnen werden und die zum Beispiel aus Paraffin bzw. Hartparaffin bestehen.

Schließlich sind "Wachse" im Sinne der Erfindung auch natürliche Wachse, die chemisch modifiziert oder vollständig synthetisiert wurden, wie zum Beispiel Polyethylene oder Copolymere oder beispielsweise auch aus Soja durch Hydrierung gewonnenes Sojawachs.

Tierische Wachse, die bei bevorzugten Ausführungsformen der vorliegenden Erfindung verwendet werden, sind beispielsweise Bienenwachs, Schellackwachs oder Walrat.

Pflanzliche Wachse, die bei bevorzugten Ausführungsformen der vorliegenden Erfindung verwendet werden, sind beispielsweise Wollwachs, Zuckerrohrwachs oder Carnaubawachs.

Bevorzugt enthält das bzw. die Wachse, welche bei der Herstellung des erfindungsgemäßen Dichtmittelzusatzes zur Verwendung kommen wenigstens einen Ester höherer aliphatischer Fettsäuren, welche vorzugsweise C30 - C34 Alkohole aufweisen.

Bei einer bevorzugten Ausführungsform des erfindungsgemäßen Dichtmittelzusatzes enthält dieser wenigstens 2 und bis zu 50 Gewichtsteile des bzw. der zugesetzten Wachse, weiter vorzugsweise 5 bis 25 Gewichtsteile, weiter vorzugsweise 20 bis 35 Gewichtsteile, weiter vorzugsweise 30 bis 45 Gewichtsteile, weiter vorzugsweise 35 bis 50 Gewichtsteile, weiter vorzugsweise 10 bis 45 Gewichtsteile, weiter vorzugsweise 20 bis 40 Gewichtsteile und weiter vorzugsweise 25 bis 35 Gewichtsteile..

Bevorzugt werden hierbei insbesondere natürliche Wachse pflanzlichen oder tierischen Ursprungs verwendet, wie zum Beispiel Jojobaöl, Wollwachs, Bienenwachs, Schellackwachs, Carnaubawachs und dergleichen. Diese Wachse haben gegenüber den synthetischen Wachsen aber auch gegenüber den Mineral-oder Erdwachsen den Vorteil eines niedrigeren Schmelzpunkts. Dadurch ist es möglich auch mit geringem technischen Aufwand geeignete Emulsionen herzustellen. Aufgrund der im Vergleich zu synthetischen Wachsen eher polaren Molekülstruktur ist die Affinität zu mineralischen Oberflächen wie auch im Zementstein vorliegend ausgepägter, wodurch auch von einer besseren hydrophobierenden Wirkung ausgegangen werden kann. Jedoch können anstelle zumindest eines Teils der natürlichen Wachse auch synthetische Wachse mit vergleichbaren oder ähnlichen Eigenschaften verwendet werden, wie zu, Beispiel Paraffinwachse, Polyethylenwachse, Ceresinwachse, Erdwachs und dergleichen.

Vorzugsweise wird das oder werden die synthetischen und/oder natürlichen Wachse dem erfindungsgemäßen Dichtmittelzusatz bei seiner Herstellung als Dispersion oder Emulsion zugefügt.

Bei einer bevorzugten Ausführungsform der Erfindung enthält der erfindungsgemäße Dichtmittelzusatz darüber hinaus auch wenigstens ein wasserlösliches oder in Wasser dispergierbares Metallsalz der C8 - C34 Fettsäuren.

Vorzugsweise handelt es sich bei dem oder den Metallsalzen der C8 - C34 Fettsäuren um Alkalimetall-, Erdalkalimetall- und Aluminiumsalze. Besonders bevorzugt werden dabei aus der Gruppe der wasserlöslichen oder dispergierbaren Metallsalze der C8 - C34 Fettsäuren ausgewählt, wie zum Beispiel Kaliumcaprylat, Kaliumcaprinat, Calciumlaurat, Natriummyristat, Natriumpalmitat, Kaliumoleat, Lithiumstearat, Natriumstearat, Kaliumstearat, Calciumstearat, Magnesiumstearat, Aluminiumdi- und -tristearat.

Dabei werden insbesondere die Metallsalze längerkettiger Fettsäuren, wie beispielsweise die Metallsalze der C16 - C20 Fettsäuren bevorzugt, da den Metallsalzen von C8 - C10 Fettsäuren der Nachteil anhaftet, dass es sowohl bei der Verarbeitung des Zusatzmittels als auch beim fertigen Produkt zu geruchlichen Belästigungen kommen kann. Bezüglich ihrer hydrophobierenden Eigenschaften wären sie vergleichbar.

Der erfindungsgemäße Dichtmittelzusatz zeichnet sich vor allem auch dadurch aus, dass es den Erfindern gelang Metallsalze der C8 bis C34 Fettsäuren, wie zum Beispiel Calcium- oder Aluminiumstearate, Kaliumstearat, Kaliumoleat oder -palmitat oder Mischungen derselben mit einem oder mehreren synthetischen und/oder natürlichen Wachsen zu einer stabilen Dispersion zu vermengen.

Durch die Hinzufügung solcher Metallsalze der C8 - C34 Fettsäuren wird die hydrophobierende Wirkung des erfindungsgemäßen Dichtmittelzusatzes weiter verbessert, so dass durch die Kombination von synthetischen und/oder natürlichen Wachsen mit Metallsalzen der C8 - C34 Fettsäuren ein Dichtmittelzusatz für zementöse Zusammensetzungen und insbesondere Beton entsteht, dessen stark wasserabweisenden Eigenschaften der Betonoberflächen, insbesondere im Innern von Rissen und Kapillaren eine deutlich verbesserte Dichtwirkung hervorrufen bzw. einer fortschreitenden Durchfeuchtung des Betons entgegenwirken.

Besonders bevorzugt weist der erfindungsgemäße Dichtmittelzusatz in flüssiger Form einen pH-Wert zwischen pH 4 und pH 12 auf, wobei bei besonders bevorzugten Ausführungsformen alkalische Bereiche mit pH Werten von 8 bis 12 oder auch pH 9 bis 12 eingesetzt werden, um die Verträglichkeit der einzelnen Komponenten des Dichtmittelzusatzes miteinander zu verbessern.

Darüber hinaus werden dem erfindungsgemäßen Dichtmittelzusatz bei einer Ausführungsform auch Basen oder Säuren zugesetzt, um den pH-Wert auf einen gewünschten Wert einzustellen und damit die Verträglichkeiten der Komponenten zueinander zu beeinflussen. Bevorzugte Basen sind dabei beispielsweise Ammoniak, Ammoniumhydroxid, Natron- oder Kalilauge und dergleichen. Bevorzugte Säuren sind dabei beispielsweise Phosphorsäuren und Carbonsäuren, wobei in bevorzugten Ausführungsformen insbesondere Fruchtsäuren und weitere Hydroxycarbonsäuren vorteilhaft eingesetzt werden können. Darüber hinaus können selbstverständlich andere dem Fachmann als geeignete Basen oder Säuren bekannte Verbindungen Verwendung finden, die in der vorstehenden Auflistung nicht explizit genannt sind.

Bemerkenswert ist in diesem Zusammenhang, dass es die Erfinder der vorliegenden Erfindung als vorteilhaft erkannt haben, hydrophobierende Komponenten in einer gegebenenfalls stark alkalischen wässrigen Lösung zu lösen bzw. diese hierin dispergieren oder zu emulgieren, was entgegen den Erwartungen aufgrund der üblichen Erfahrungen der einschlägigen Fachkreise mit der erfindungsgemäßen Rezeptur auch gelingt.

Bei weiteren bevorzugten Ausführungsformen der Erfindung enthält der Dichtmittelzusatz zudem wenigstens eine verzögernde Komponente. Vorzugsweise kommen dabei verzögernde Komponenten zum Einsatz welche ausgewählt sind aus der Gruppe enthaltend, Kaliumgluconat, Weinsäure, Kalium-Natriumtartrat, Zitronensäure, Trinatriumcitrat, Tributylphosphat, Tetrakaliumdiphosphat, Natriummonofluorphosphat und Kombinationen hiervon und dergleichen.

Bei wiederum weiteren bevorzugten Ausführungsformen der Erfindung enthält der Dichtmittelzusatz zudem wenigstens eine stabilisierend wirkende Komponente. Vorzugsweise kommen dabei stabilisierend wirkende Komponenten zum Einsatz welche ausgewählt sind aus der Gruppe enthaltend Xanthan Gum, Welan Gum, Gummi Arabicum, Methylydroxyethylcellulose, Methylhydroxyproylcellulose, Carboxymethylcellulose, Polyacrylsäure-Natriumsalze, Bentonit, Sepiolit, Attapulgit, Kombinationen hiervon und dergleichen.

Der Einsatz wenigstens einer stabilisierend wirkenden Komponente führt dabei zu einer verbesserten bzw. vereinfachten Verarbeitbarkeit des erfindungsgemäßen Dichtmittelzusatzes auch nach längeren Standzeiten, da hierdurch eine Entmischung bzw. ein Absetzen insbesondere des oder der emulgierten oder dispergierten Wachse vermieden werden kann.

Bei einer besonders bevorzugten Ausführungsform der vorliegenden Erfindung enthält der Dichtmittelzusatz zusätzlich einem Teil oder allen vorstehenden Komponenten auch wasserlösliche Carbonate.

Durch die Zugabe solcher Carbonate erfolgt einerseits eine weitere Stabilisierung der erfindungs-gemäßen Zusammensetzung, insbesondere bei Kälte, zum anderen wird hierdurch der Effekt einer Rissheilung erzielt, was bei der Verwendung von zementösen Zusammensetzungen und Beton im Bereich der Wasserbauten von besonderem Vorteil ist.

Die zugegebenen wasserlösliche Carbonate dienen dabei im Festbeton als Carbonatquellen, aus denen bei einem Wassereintritt durch Risse oder Kapillaren Carbonationen in Lösung gehen und in die Risse und Kapillaren eindiffundieren. Dort erfolgt eine Carbonatisierung und damit eine Verschluss der Risse oder der Kapillaren.

Bei Versuchen zu Rissheilung unter Verwendung des erfindungsgemäßen Dichtmittelzusatzes konnte gezeigt werden, dass auch Risse mit größeren Rissbreiten bereits nach kurzer Zeit ausheilten. Die Rissheilung erfolgte dabei insbesondere auch bei anstehendem Wasser im Wesentlichen unvermindert. Besonders hervorzuheben ist hierbei, dass die mit dem erfindungsgemäßen Dichtmittelzusatz erreichte Rissheilung sehr schnell erfolgt, so dass beispielsweise der Wasserdurchtritt bei einer Rissbreite von 0,3 mm bereits innerhalb von (12) Tagen um über 90 % reduziert wird.

Diese schnelle Rissheilung konnte bisher nicht beobachtet werden und ist auf das Wechselspiel der stark hydrophobierenden Komponenten und insbesondere der Wachskomponenten mit den verwendeten Karbonatquellen des erfindungsgemäßen Dichtmittelzusatzes zurückzuführen. Dies ist insbesondere überraschend, da in den einschlägigen Fachkreisen angenommen wurde, dass die Zumischung von stark hydrophobierenden Komponenten den Wassertransport innerhalb von Rissen und Kapillaren auf eine Weise beeinflusst, die zu einem verringerten Herauslösen und einem verschlechterten Transport von Karbonationen aus dem Festbeton führt und damit keine oder eine nur unzureichende Karbonatisierung - und damit ein unbrauchbare Rissheilungerfolgen kann.

Besonders bevorzugt sind die wasserlöslichen Carbonate und Hydrogencarbonate ausgewählt aus einer Gruppe welche Alkalikarbonate und Ammoniumkarbonate , wie zum Beispiel Natriumcarbonat, Natriumhydrogencarbonat, Kaliumcarbonat, Kaliumhydrogencarbonat, Lithiumcarbonat, Lihtiumhydrogencarbonat und Ammoniumcarbonat, Ammoniumhydrogencarbonat sowie Kombinationen hiervon und dergleichen enthält.

Der erfindungsgemäße Dichtmittelzusatz, insbesondere enthaltend wasserlösliche Karbonate ist besonders geeignet zur Herstellung von zementösen Zusammensetzungen bzw. Beton mit hervorragenden wasserabweisenden und wasserabdichtenden Eigenschaften. Versuche zur Bestimmung der Dichtwirkung haben dabei gezeigt, dass ein Eindringen von Wasser in Beton, welcher unter Verwendungen des erfindungsgemäßen Dichtmittelzusatzes hergestellt wurde auch bei hohen Wasserdrucken erfolgreich verhindert wird, ohne dass dabei wesentliche andere Eigenschaften des Betons, wie zum Beispiel, Druck- und Zugfestigkeit nicht negativ beeinflußt werden.

Zur Herstellung von bevorzugten Ausführungsformen des erfindungsgemäßen Dichtmittelzusatzes wurden zunächst das wenigstens eine ausgewählte Metallsalz der Fettsäuren in wässriger Lösung dispergiert. Mit wenigstens einem ausgewählten Wachs wurde in gleicher Weise verfahren. Die Mischungen wurden gegebenenfalls maschinell emulgiert bzw. homogenisiert. Beim Abmischen der beiden Komponenten im weiteren Verlauf der Herstellung des Dichtmittelzusatzes wurden die an sich bestehenden Unverträglichkeiten durch die Beimischung von Stabilisatoren und/oder die Einstellung des pH-Werts der Lösung überwunden.

Durch die anschließende Beimischung von wenigstens einer verzögernd wirkenden Komponente konnte verhindert werden, dass das ebenfalls wenigstens eine zugegebene wasserlösliche Karbonat in der zementösen Zusammensetzung eine zu schnelle Erstarrung auslöst und es damit zu einem vorzeitigen Auskristallisieren bzw. einer Karbonatisierung kommt, wodurch die Wirkung des Dichtungsmittelzusatzes und die Verarbeitbarkeit der zementösen Zusammensetzung beeinträchtigt würde.

### BEISPIELE

Zur Herstellung von bevorzugten Ausführungsformen des erfindungsgemäßen Dichtmittelzusatzes im Labormaßstab wird ein 31- Dreihalskolben eingesetzt, der für die Sicherstellung einer gewissen Temperaturkonstanz mittels Stativ in einem thermostatisierbaren Wasserbad positioniert wird. Der mittlere Kolbenhals ist mit einem regelbaren Rührwerk bestückt, wobei das Rühraggregat auch eine dispergierende Wirkung (Dissolver) besitzen muss. Der rechte und linke Schliff ist mit einem 100ml Aufsatztropftrichter bzw. einer pH-Glaselektrode und einem Temperaturmessfühler (z.B. Pt 100) verbunden mit der entsprechenden Messwertanzeige ausgerüstet.

### Beispiel Nr. 1

Für die Herstellung von 2 kg des erfindungsgemäßen Dichtmittelzusatzes in einer bevorzugten Ausführungsform werden zunächst 1345 g entmineralisiertes Wasser vorgelegt und auf etwa 20 - 25 °C unter Rühren (ca. 500 U/min) vortemperiert. Danach werden 3,0 g Xanthan Gum eingestreut und solange gerührt bis eine homogene Lösung vorliegt. Die Drehzahl des Rührwerks wird nun auf ca. 1200 U/min erhöht und 40,0 g Aluminiumdistearat langsam und gleichmäßig eingestreut. Der Ansatz wird anschließend 5 Min. dispergiert. Über den Tropftrichter werden unter Rühren Rühren (500 U/min) soviel Kalilauge 45 %ig (Gesamtmenge 72,0 g) entsprechend langsam zudosiert, dass die Temperatur von 30°C im Kolben nicht überschritten und ein pH-Wert von max. 12,0 erreicht wird. Unter kontinuierlichem Rühren (500 U/min) werden nun 100,0 g eines Gemischs (1:1) aus Capryl-und Caprinsäure zugegeben. Die Umsetzung ist quantitativ, wenn der pH-Wert zwischen 9,5 und 10,0 konstant bleibt. Nun wird ein Tropftrichter mit 60,0 g 50%iger Gluconsäure aufgesetzt und die Lösung langsam zudosiert. Sobald die Schaubildung abgeklungen ist, werden nach Erhöhung der Rührgeschwindigkeit (ca. 1200 U/min) 260,0 g Ammoniumcarbonat kontinuierlich eingestreut und weitere 5 Min. eingemischt. Mit der Restmenge an Kalilauge wird nun der pH-Wert langsam auf 11,5 erhöht, die Drehzahl des Rührers auf ca. 600 U/min reduziert und anschließend nacheinander 40,0 g Calciumstearat-Dispersion, 40,0 g Spindelöl (z.B. Shell Gravex 913) und 200,0 g Carnaubawachs-Emulsion zugegeben. Der fertige Ansatz wird weitere 5 Min. bei konstanter Drehzahl gerührt und gegebenenfalls unter weiterem langsamem Rühren auf 20°C abgekühlt.

### Beispiel Nr. 2

Für die Herstellung von 2 kg des erfindungsgemäßen Dichtmittelzusatzes in einer bevorzugten Ausführungsform werden zunächst 1387 g entmineralisiertes Wasser vorgelegt und auf etwa 20 - 25 °C unter Rühren (ca. 600 U/min) vortemperiert. Danach werden 3,0 g Xanthan Gum eingestreut und solange gerührt bis eine homogene Lösung vorliegt. Die Drehzahl des Rührwerks wird nun auf ca. 1200 U/min erhöht und 40,0 g Aluminiumdistearat langsam und gleichmäßig eingestreut. Der Ansatz wird anschließend 5 Min. dispergiert. Über den Tropftrichter wird solange Kalilauge (Gesamtmenge 10,0 g) zudosiert bis ein pH-Wert von 9,5 erreicht ist. Die Temperatur im Kolben darf hierbei 30°C nicht übersteigen. Nach Zugabe von 40,0 g Kalium Natrium-Tartrat, werden 260,0 g Ammoniumcarbonat kontinuierlich eingestreut und weitere 5 Min. eingemischt. Mit der Restmenge an Kalilauge wird nun der pH-Wert langsam auf 11,5 erhöht, die Drehzahl des Rührers auf ca. 600 U/min reduziert und anschließend nacheinander 20,0 g Calciumstearat-Dispersion, 40 g Spindelöl (z.B. Shell Gravex 913) und 200,0 g Carnaubawachs-Emulsion zugegeben. Der fertige Ansatz wird weitere 5 Min. bei konstanter Drehzahl gerührt und gegebenenfalls unter weiterem langsamem Rühren auf 20°C abgekühlt

### Beispiel Nr.3

Für die Herstellung von 2 kg des erfindungsgemäßen Dichtmittelzusatzes in einer weiteren bevorzugten Ausführungsform werden zunächst 1414,2 g entmineralisiertes Wasser vorgelegt und auf etwa 20 - 25 °C unter Rühren (ca. 600 U/min) vortemperiert. Danach werden 3,0 g Xanthan Gum eingestreut und solange gerührt bis eine homogene Lösung vorliegt. Die Drehzahl des Rührwerks wird nun auf ca. 1200 U/min erhöht und 40,0 g Aluminiumdistearat langsam und gleichmäßig eingestreut. Der Ansatz wird anschließend 5 Min. dispergiert und danach wird über den Tropftrichter soviel Kalilauge 45 %ig (Gesamtmenge 20,0 g) zugegeben, dass der pH-Wert bei ca. 11,5 konstant bleibt. Unter kontinuierlichem Rühren werden nun 2,8 g Diphosphorsäure zugegeben. Die Umsetzung ist quantitativ, wenn der pH-Wert zwischen 9,5 und 10,0 konstant bleibt. Nach Erhöhung der Rührgeschwindigkeit (ca. 1200 U/min) werden 240,0 g Natriumcarbonat kontinuierlich eingestreut und weitere 5 Min. eingemischt. Mit der Restmenge an Kalilauge wird nun der pH-Wert langsam auf 11,5 erhöht, die Drehzahl des Rührers auf ca. 600 U/min reduziert und anschließend nacheinander 40,0 g Spindelöl (z.B. Shell Gravex 913) und 240,0 g Carnaubawachs-Emulsion zugegeben. Der fertige Ansatz wird weitere 5 Min. bei konstanter Drehzahl gerührt und gegebenenfalls unter weiterem langsamem Rühren auf 20°C abgekühlt.

### TESTERGEBNISSE

### Herstellung von Normmörtel - Kapillare Wasseraufnahme

Für die Herstellung der Mörtelmischungen wurde ein CEM I 42,5 R Werk Geseke verwendet. Die Konsistenz der Mörtelmischungen wurde über das Ausbreitmass konstant gehalten. Standardmäßig wurden die jeweiligen bevorzugten Ausführungsformen des Dichtmittelzusatzes mit 2 Gew.% bezogen auf den Zementanteil zugegeben. Der Wasseranteil des Dichtmittelzusatzes wurde bei der Bemessung des Wasseranteils berücksichtigt. Die aus der Referenzmörtel und den Prüfinischungen hergestellten Mörtelprismen wurden vor der Ermittlung der kapillaren Wasseraufnahme EN 480-5 jeweils 7 und 90 d vorgelagert. Die Ergebnisse sind in Tabelle 1 zusammengestellt. Im Falle der Prüfinischung 1 erkennt man, dass die kapillare Wasseraufnahme durch Zusatz des Dichtmittelzusatzes bereits nach 7d Vorlagerung um mehr als 50 % gegenüber dem Referenzmörtel reduziert wird. Auch die Überprüfung des Ergebnisses nach 90 d Vorlagerung führte zu einer Bestätigung der hervorragenden Wirkung des Dichtmittelzusatzes.

### Herstellung von Beton - Untersuchung der Rissheilung

Mit diesen Versuchen sollte überprüft werden, wie sich der erfindungsgemäße Dichtmittelzusatz auf die Selbstheilung anfangs wasserdurchflossener Risse auswirkt. Als Grundkörper für die Untersuchungen wurden Betonplatten mit den Maßen 300 x 200 x 40 mm eingesetzt. Konstruktiv waren die Prüfkörper mit einer Gleitbewehrung in Längsrichtung und einer kerbförmigen Sollbruchstelle mittig in Querrichtung ausgelegt. Für die Herstellung der Platten wurde ein Beton der Festigkeitsklasse C.30/37 mit folgender Zusammensetzung verwendet:

| | |
|---|---|
| CEM I 42,5 R Werk Geseke | 800 GT |
| Zuschlag Körnung 0 - 4mm | 3000 GT |
| Zuschlag Körnung 4 - 8mm | 800 GT |
| Wasser | 400 GT |
| Fliessmittel | 8 GT |
| Dichtmittelzusatz | 16 GT |

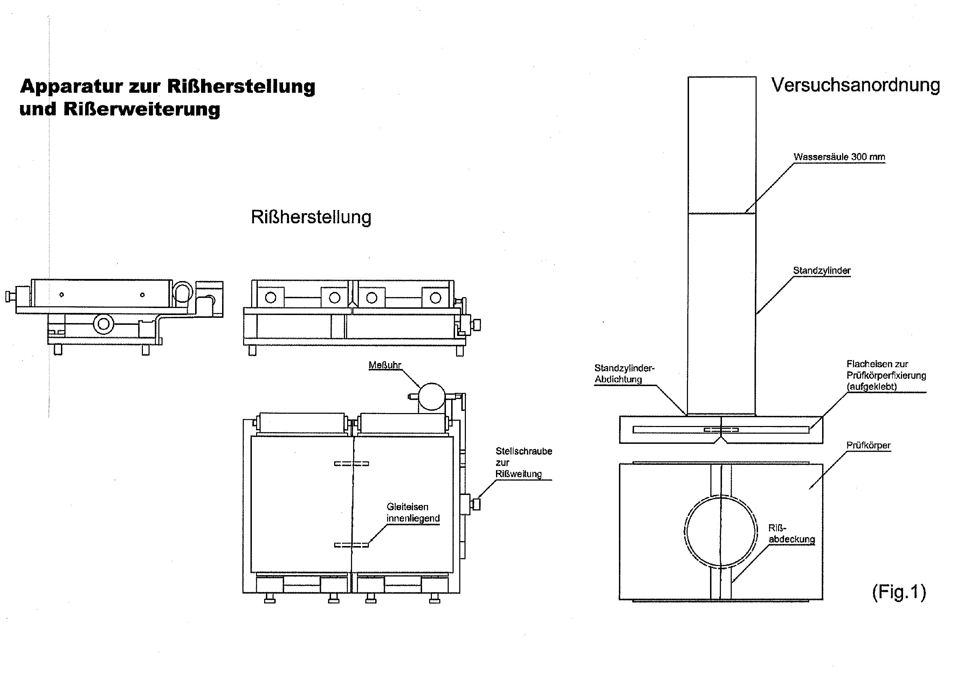

Nach 28 d Lagerung (Normalklima) wurden die Betonplatten an der Sollbruchstelle gebrochen und eine Vorrichtung zur kontrollierten Rissaufweitung (Fig. 1) eingespannt. Durch Aufweiten der Bruchstelle wurde ein durchgängiger Riss mit einer Rissweite von 0,3 mm erzeugt. Anschließend wurde ein Kunststoffzylinder so auf der Oberfläche der Betonplatte fixiert und angedichtet, dass der Riss mittig unter der Zylinderöffnung verläuft. Nach Aushärtung der Dichtung wurde der aufgesetzte Zylinder mit Wasser befüllt. Über eine Versuchsdauer von 30 d wurde die Zeit bis zum vollständigen Leerlaufen des Aufsatzrohrs ermittelt und daraus die Durchflussgeschwindigkeit berechnet. Die Ergebnisse sind in Tabelle 2 zusammengestellt. Man erkennt , dass bereits nach 4 Tagen eine Durchflussreduzierung um ca. 12% ermittelt wurde. Mit fortschreitender Versuchsdauer zeigte der Selbstdichtungsprozess einen nahezu exponentiellen Verlauf, so dass nach 15 Tagen eine Reduzierung des anfänglichen Wasserdurchtritts um 98% realisiert werden konnte.

| **Tabelle 1 - Normmörtel** | | | | | | | | |
|---|---|---|---|---|---|---|---|---|
| | **Referenzmörtel** | | | | **Prüfmischung 1** | | | |
| **Frischmörtelmischung, g** | | | | | | | | |
| CEM I 42,5 R | 450 | | | | 450 | | | |
| Normensand | 1350 | | | | 1350 | | | |
| Wasser | 225 | | | | 220 | | | |
| Zusatzmittel | | | | | 9 | | | |
| | | | | | | | | |
| Dosierung Zusatzmittel, % | | | | | 2 | | | |
| W/Z | 0,5 | | | | 0,5 | | | |
| Ausbreitmass, cm | 16,5 | | | | 16,6 | | | |
| | | | | | | | | |
| **Kapillare Wasseraufnahme an Normmörtelprismen nach EN 480-5** | | | | | | | | |

| Prüfkörper Nr. | 1 | 2 | 3 | MW | 1 | 2 | 3 | MW |
|---|---|---|---|---|---|---|---|---|
| Prismengewicht nach 7d Lagerung, g | 548,69 | 548,66 | 546,2 | | 538,01 | 538,55 | 531,86 | |
| Gewichtszunahme, g nach 7d Absorption | 26,93 | 26,13 | 26,97 | 26,67 | 11,88 | 11,68 | 13,02 | 12,19 |
| Prismengewicht nach 90 d Lagerung, g | 544,00 | 540,20 | 546,76 | | 534,19 | 529,95 | 538,16 | |
| Gewichtszunahme, g nach 7d Absorption | 33,11 | 33,31 | 33,42 | 33,28 | 15,75 | 16,14 | 15,51 | 15,80 |
| Gewichtszunahme, g nach 28 d Absorption | 33,62 | 33,81 | 33,88 | 33,77 | 16,12 | 16,28 | 15,92 | 16,11 |
| Gewichtszunahme, % | | | | | | | | |
| nach 7d Lagerungl7d Absorption | 4,90 | 4,76 | 4,93 | 4,86 | 2,21 | 2,17 | 2,44 | 2,27 |
| **Unterschied zum Referenzmörtel, %** | | | | | **45,70** | | | |
| nach 90d Lagerung/7d Absorption | 6,09 | 6,16 | 6,11 | 6,12 | 2,95 | 3,04 | 2,88 | 2,95 |
| nach 90d Lagerung/28d Absorption | 6,2 | 6,26 | 6,19 | 6,21 | 2,97 | 3,06 | 2,96 | 3,00 |
| **Unterschied zum Referenzmörtel, %** | | | | | **47,8** | | | |

| Tabelle 2 Beton - Rissheilung | | | |
|---|---|---|---|
| **Versuchsparameter** | | | |
| Zylinderdurchmesser, mm | 103 | Rissbreite, mm | 0,30 |
| Zylinderhöhe,mm | 280 | Risslänge, mm | 103 |
| Füllvolumen, ml | 2333 | Risstiefe, mm | 30 |
| | | | |

| **Bestimmumg der Auslaufzeit nach** | **Auslaufzeit, min.** | **Durchfluss, ml/h** | **Durchfluss-reduzierung, %** |
|---|---|---|---|
| 0 Tagen | 15 | 9332 | 0 |
| 1 Tagen | 15 | 9332 | 0 |
| 2 Tagen | 15 | 9332 | 0 |
| 3 Tagen | 17 | 8234 | 11,8 |
| 4 Tagen | 17 | 8234 | 11,8 |
| 5 Tagen | 18 | 7776 | 16,7 |
| 8 Tagen | 22 | 6362 | 31,8 |
| 10 Tagen | 30 | 4666 | 50,0 |
| 12 Tagen | 240 | 583 | 93,8 |
| 15 Tagen | 512 | 273 | 97,7 |
| 20 Tagen | 1010 | 146 | 98,4 |
| 30 Tagen | 1507 | 93 | 99,0 |

## Patentansprüche

1. Hydrophobierender Dichtmittelzusatz für zementöse Zusammensetzungen und insbesondere Beton, enthaltend:
wenigstens ein synthetisches und/oder natürliches Wachs in Dispersion oder Emulsion.

2. Hydrophobierender Dichtmittelzusatz gemäß Anspruch 1, **dadurch gekennzeichnet, dass** die Dispersion oder Emulsion wässrig ist.

3. Hydrophobierender Dichtmittelzusatz gemäß Anspruch 1 oder 2, **dadurch gekennzeichnet, dass** das Wachs bzw. die Wachse wenigstens einen Ester höherer aliphatischer Fettsäuren ausgewählt aus der Gruppe der C30 - C34 Alkoholen aufweisen.

4. Hydrophobierender Dichtmittelzusatz gemäß Anspruch 1 oder 2, **dadurch gekennzeichnet, dass** das Wachs bzw. die Wachse aus einer Gruppe ausgewählt sind, die tierische Wachse, pflanzliche Wachse, Lipide, Jojobaöl, Wollwachs, Bienenwachs, Schellackwachs, Walrat, Carnaubawachs, Zuckerrohrwachs, Polyethylenwachse, Paraffin bzw. Hartparaffin, Ceresinwachs, Erdwachs, Silikonöl, Polyethylenwachse, Sojawachs, Kombinationen hiervon und dergleichen enthält.

5. Hydrophobierender Dichtmittelzusatz gemäß einem der Ansprüche 1 bis 4, **dadurch gekennzeichnet, dass** das Wachs bzw. die Wachse einen Gewichtsanteil von wenigstens 2 und bis zu 50 % hat, vorzugsweise 5 bis 25 %, vorzugsweise 15 bis 35 %, vorzugsweise 30 bis 45 %, vorzugsweise 35 bis 50 %, vorzugsweise 15 bis 45 %, vorzugsweise 20 bis 40 % und vorzugsweise 25 bis 35 %.

6. Hydrophobierender Dichtmittelzusatz gemäß einem der Ansprüche 1 bis 5, **dadurch gekennzeichnet, dass** wenigstens ein wasserlösliches oder in Wasser dispergierbares Metallsalz ausgewählt aus der Gruppe der C8 - C34 Fettsäuren enthalten ist.

7. Hydrophobierender Dichtmittelzusatz gemäß Anspruch 6, **dadurch gekennzeichnet, dass** das Metallsalz der C8 - C34 Fettsäuren aus einer Gruppe ausgewählt ist die Alkali- oder Erdalkalilmetallsalze der C8 - C34 Fettsäuren, Kaliumcaprylat, Kaliumcaprinat, Calciumlaurat, Natriummyristat, Natriumpalmitat, Kaliumoleat, Lithiumstearat, Natriumstearat, Kaliumstearat, Calciumstearat, Magnesiumstearat, Aluminiumdi- und -tristearat und dergleichen enthält.

8. Hydrophobierender Dichtmittelzusatz gemäß einem der vorhergehenden Ansprüche, **gekennzeichnet durch** einen pH-Wert von pH 4 bis pH 12, vorzugsweise pH 8 bis pH 12 und vorzugsweise pH 9 bis pH 11.

9. Hydrophobierender Dichtmittelzusatz gemäß einem der vorhergehenden Ansprüche, **dadurch gekennzeichnet, dass** zur Einstellung des pH-Werts Basen und/oder Säuren enthalten sind, vorzugsweise Ammoniak, Ammoniumhydroxid, Natronlauge, Kalilauge, und dergleichen, sowie Orthophosphorsäure, Diphosphorsäure und Carbonsäuren insbesondere Fruchtsäuren und andere Hydroxycarbonsäuren und dergleichen.

10. Hydrophobierender Dichtmittelzusatz gemäß einem der vorhergehenden Ansprüche, **dadurch gekennzeichnet, dass** wenigstens eine verzögernde Komponente enthalten ist, vorzugsweise Weinsäure, Kalium-Natriumtartrat, Kaliumgluconat, Zitronensäure, Trinatriumcitrat, Tributylphosphat, Tetrakaliumdiphosphat, und Kombinationen hiervon und dergleichen.

11. Hydrophobierender Dichtmittelzusatz gemäß einem der vorhergehenden Ansprüche, **dadurch gekennzeichnet, dass** wenigstens ein wasserlösliches Carbonat oder Hydrogencarbonat enthalten ist

12. Hydrophobierender Dichtmittelzusatz gemäß Anspruch 11, **dadurch gekennzeichnet, dass** das wasserlösliche Karbonat ausgewählt ist aus der Gruppe enthaltend Alkalicarbonate und Ammoniumcarbonate, wie zum Beispiel Natriumcarbonat, Natriumhydrogencarbonat, Kaliumcarbonat, Kaliumhydrogencarbonat, Lithiumcarbonat, Lihtiumhydrogencarbonat und Ammoniumcarbonat, Ammoniumhydrogencarbonat sowie Kombinationen hiervon und dergleichen enthält.

13. Verwendung eines hydrophobierenden Dichtmittelzusatzes für zementöse Zusammensetzungen und insbesondere Beton gemäß einem der Ansprüche 1 bis 12 zur Herstellung von Frischbeton, vorzugweise zur Herstellung von Frischbeton für die Verwendung bei mit Wasser in unmittelbarem Kontakt stehenden Bauwerken.

14. Zementöse Zusammensetzung, insbesondere Beton enthaltend einen Dichtmittelzusatz gemäß einem der Ansprüche 1 bis 12.
